# EUROPÄISCHE PATENTSCHRIFT

(11) **EP 3 488 378 B1**
(45) Veröffentlichungstag und Bekanntmachung des Hinweises auf die Patenterteilung: **25.06.2025**
(21) Anmeldenummer: 17710141.7
(22) Anmeldetag: 24.02.2017
(51) Int. Cl.: G06V 20/20

(54) **SYSTEM ZUR AUTOMATISCHEN ERKENNUNG VON PFLANZEN**
SYSTEM FOR AUTOMATICALLY RECOGNIZING PLANTS
SYSTÈME DE RECONNAISSANCE AUTOMATIQUE DE PLANTES

(30) Priorität: 20.07.2016 DE 202016004430 U
(43) Veröffentlichungstag der Anmeldung: 29.05.2019
(73) Patentinhaber: M-Farms GmbH, 82166 Gräfelfing (DE)
(72) Erfinder: SCHLEMMER, Christian, 80636 München (DE)
(74) Vertreter: DTS Patent- und Rechtsanwälte PartmbB
(86) Internationale Anmeldenummer: PCT/EP2017/054318
(87) Internationale Veröffentlichungsnummer: WO 2018/015030

(56) Entgegenhaltungen:
- WO-A1-2006/117581
- CN-A- 101 902 618
- CN-A- 104 063 686
- SRDJAN SLADOJEVIC ET AL: "Deep Neural Networks Based Recognition of Plant Diseases by Leaf Image Classification", COMPUTATIONAL INTELLIGENCE AND NEUROSCIENCE, 29 May 2016 (2016-05-29), pages 1 - 11, XP055385550, Retrieved from the Internet <URL:http://downloads.hindawi.com/journals/cin/2016/3289801.pdf> [retrieved on 20170627], DOI: 10.1155/2016/3289801
- MAHBUBUR RAHMAN ET AL: "Smartphone-based hierarchical crowdsourcing for weed identification", COMPUTERS AND ELECTRONICS IN AGRICULTURE, vol. 113, 1 April 2015 (2015-04-01), AMSTERDAM, NL, pages 14 - 23, XP055319067, ISSN: 0168-1699, DOI: 10.1016/j.compag.2014.12.012
- BEHMANN JAN ET AL: "A review of advanced machine learning methods for the detection of biotic stress in precision crop protection", PRECISION AGRICULTURE, SPRINGER US, BOSTON, vol. 16, no. 3, 31 August 2014 (2014-08-31), pages 239 - 260, XP035500796, ISSN: 1385-2256, [retrieved on 20140831], DOI: 10.1007/S11119-014-9372-7
- TOKIHIRO FUKATSU ET AL: "Web-based sensor network system Field Servers for practical agricultural applications", WEB INTELLIGENCE AND SMART SENSING, ACM, 2 PENN PLAZA, SUITE 701 NEW YORK NY 10121-0701 USA, 1 September 2014 (2014-09-01), pages 1 - 8, XP058055293, ISBN: 978-1-4503-2747-3, DOI: 10.1145/2637064.2637090
- IRSHAD AHMAD ET AL: "Weed classification based on Haar wavelet transform via k-nearest neighbor (k-NN) for real-time automatic sprayer control system", UBIQUITOUS INFORMATION MANAGEMENT AND COMMUNICATION, ACM, 2 PENN PLAZA, SUITE 701 NEW YORK NY 10121-0701 USA, 21 February 2011 (2011-02-21), pages 1 - 6, XP058000688, ISBN: 978-1-4503-0571-6, DOI: 10.1145/1968613.1968634
- SCOTFORD I M ET AL: "Applications of Spectral Reflectance Techniques in Northern European Cereal Production: A Review", BIOSYSTEMS ENGINEERING, ACADEMIC PRESS, UK, vol. 90, no. 3, 1 March 2005 (2005-03-01), pages 235 - 250, XP004769511, ISSN: 1537-5110

## Beschreibung

Die vorliegende Erfindung betrifft ein System zur automatischen Erkennung von Pflanzen.

Im Bereich der Landwirtschaft, aber auch im Bereich der Botanik und der Ausbildung im Zusammenhang mit Land- und Forstwirtschaftsberufen, aber auch im Bereich Biologie und Botanik, ist es notwendig, Pflanzen sicher erkennen zu können.

Dokument MAHBUBUR RAHMAN ET AL: "Smartphone-based hierarchical crowdsourcing for weed identification",COMPUTERS AND ELECTRONICS IN AGRICULTURE, Bd. 113, 1. April 2015 (2015-04-01), Seiten 14-23, XP055319067,AMSTERDAM, NL ISSN: 0168-1699, DOI: 10.1016/j.compag.2014.12.012 offenbart ein Verfahren zur Erkennung von Pflanzen und Pflanzenkrankheiten mit Hilfe eines Mobiltelefons. Ein mit dem Mobiltelefon aufgenommenes Bild wird an einen Server gesendet. Der Erkennungsalgorithmus läuft auf dem Server und vergleicht das Bild mit Bildern, die in einer Datenbank gespeichert sind. Das Ergebnis wird an das Mobiltelefon zurückgesendet.

Aus der DE 43 29 343 A1 ist bereits ein feldtaugliches bildanalytisches Verfahren zur automatischen Erkennung und Bekämpfung von Unkrautarten bekannt. Dabei wird ein Rechner mit Kamera vor Ort aufgebaut, um dort Unkräuter erkennen zu können. Allerdings kann nur eine bestimmte Anzahl von Unkräutern erkannt werden, darüber hinaus ist das aus der DE 43 29 343 A1 bekannte System vergleichsweise groß und deshalb nicht gut handhabbar.

Aus der DE 10 2010 048 298 A1 ist weiter eine Einrichtung zur Erfassung des Wachstums einer Vielzahl biologischer Proben bekannt. Dabei geht es insbesondere um die Phänotypisierung bzw. Charakterisierung von Pflanzen. Mittels einer Einrichtung wird das Wachstum der Pflanzen erfasst. Diese Pflanzen sind also auf einer Regalfläche angeordnet. Eine Kamera ist an einer Verfahreinrichtung befestigt und oberhalb der Proben über mehrere Zeitabschnitte jeweils entlang den gleichen Verfahrweg verfahrbar. Dabei werden mosaikartig zusammengesetzte Einzelbilder von der Vielzahl der Proben erstellt, die in einer Datenbank gespeichert werden und als Kachelgraphik darstellbar sind.

Aus der DE 102 45 900 A1 ist ein bildbasiertes Anfragesystem für Suchmaschinen für mobile Endgeräte mit eingebauter Kamera bekannt. Mittels dieses Systems können Objekte automatisch erkannt werden. Dabei handelt es sich allerdings um Sehenswürdigkeiten einer Stadt oder die Texterkennung von Schildern, die in einer Sprache abgefasst sind, derer man selbst nicht mächtig sind. Weitere Anwendungsbereiche sind Stadt- und Museumsführer und/oder Gesichtserkennungssysteme.

Aus der DE 101 10 979 A1 ist weiter eine Anordnung zur Verknüpfung von optisch erkannten Mustern mit Informationen bekannt. Diese Anordnung dient zur Verknüpfung von optisch erkennbaren Mustern eines Objekts mit Informationen mit einer Kamera zur Aufnahme des Musters, wobei weiter ein Musterspeicherbereich, in dem Referenzmuster abgelegt sind, mit einer Bearbeitungseinheit, die die Referenzmuster mit dem aufgenommenen Muster vergleicht und mit einem Informationsspeicherbereich, in dem die Informationen in Relation zu den Referenzmustern abgelegt sind, mit einer weiteren Baugruppe, die die Informationen verarbeitet, versehen ist. Als Hauptanwendungsbereich werden Universalfernbedienungen im Zusammenhang mit CD-Playern oder TV-Geräten benannt.

Es ist die Aufgabe der vorliegenden Erfindung, ein System zur automatischen Erkennung von Pflanzen in vorteilhafter Weise weiterzubilden, insbesondere dahingehend, dass Pflanzen einfach und sicher erkannt werden können und eine zuverlässige Bestimmung bei gleichzeitig unmittelbarer Bearbeitung, d.h. Bestimmung innerhalb weniger Sekunden bzw. Minuten möglich ist.

Diese Aufgabe wird erfindungsgemäß gelöst durch ein System zur automatischen Erkennung von Pflanzen mit den Merkmalen des Anspruchs 1. Danach ist vorgesehen, dass ein System zur automatischen Erkennung von Pflanzen mit wenigstens einer zentralen Servereinheit, wenigstens einem Netzwerk, wenigstens einer automatischen Bildverarbeitungseinheit, wenigstens einer Pflanzendatenbankeinheit, in der Pflanzendaten eingespeichert sind, wenigstens einer Bilddatenbankeinheit, in der Bilddaten betreffend Pflanzen eingespeichert sind und mit wenigstens einem mobilen Endgerät mit wenigstens einer Kamera versehen ist, wobei die zentrale Servereinheit über das Netzwerk mit dem mobilen Endgerät im Betriebszustand in Datenverbindung ist, wobei mittels der Kamera des Endgeräts Bilddaten einer Pflanze erzeugbar und über das Netzwerk an die Servereinheit übertragbar sind, wobei die automatische Bildverarbeitungseinheit gemeinsam mit der Pflanzendatenbankeinheit und der Bilddatenbankeinheit anhand der übermittelten Bilddaten durch Abgleich mit in der Pflanzendatenbankeinheit und der Bilddatenbankeinheit die übermittelten Bilddaten der Pflanze dahingehend auswertet, dass die Pflanze bestimmbar ist und diese Bestimmung an das mobile Endgerät über das Netzwerk durch die Servereinheit rückübertragbar ist.

Die Erfindung basiert auf dem Grundgedanken, dass ein System zur automatischen Erkennung von Pflanzen bereitgestellt wird, wobei zur Bestimmung und Erkennung der Pflanze es genügt, mit dem mobilen Endgerät eine Aufnahme der Pflanze in jeglichem Wachstumsstadium der Pflanze zu machen. Dieses Bild wird sodann an die Servereinheit übertragen und dort mittels einer automatischen Bildverarbeitungseinheit weiterverarbeitet, automatisch erkannt und durch Abgleich mit einer Datenbank, in der Pflanzendaten und einer weiteren Datenbank, in der die zugehörigen Bilddaten zu den jeweiligen Pflanzen hinterlegt sind, abgeglichen. Anhand dieses Abgleichs ist es dann möglich, automatisch die auf dem Bild abgebildete Pflanze automatisch zu erkennen und diese Information an das mobile Endgerät zurück zu übertragen.

Des Weiteren kann vorgesehen sein, dass eine Pflanzenschutzmitteldatenbankeinheit vorgesehen ist, in der Pflanzenschutzmitteldaten eingespeichert sind, wobei weiter in der Pflanzenschutzmitteldatenbankeinheit Verknüpfungsdaten eingespeichert sind, mittels derer die Pflanzenschutzmitteldaten mit den Bilddaten und/oder Pflanzendaten durch ein Datenauswertemodul verknüpft sind. Denkbar ist in diesem Zusammenhang insbesondere, dass die Pflanzendaten und auch die Bilddaten im Zusammenhang mit sogenannten Unkräutern stehen. Insbesondere im landwirtschaftlichen und forstwirtschaftlichen Bereich kann es von Interesse sein, Pflanzen in jedem Wachstumsstadium und zu jeder Jahreszeit einfach anhand von Bilddaten bestimmen zu können und basierend auf dieser Bestimmung auch gleich einen Vorschlag erhalten zu können, welches Pflanzenschutzmittel, insbesondere Pestizid, verwendet werden kann bzw. verwendet werden soll, um die unerwünscht wachsenden Pflanzen entsprechend entfernen zu können.

Darüber hinaus kann vorgesehen sein, dass die Pflanzenschutzmitteldaten Wirkstoffgruppendaten und/oder Herstellerdaten betreffend den Hersteller eines Pflanzenschutzmittels umfassen. Durch die Angabe von Wirkstoffgruppendaten können im Hinblick auf zu verwendende Pflanzenschutzmittel mittels des Systems gezielt geeignete Wirkstoffgruppen angegeben werden, um hierdurch die Auswahl des geeigneten Pflanzenschutzmittels oder der geeigneten Pflanzenschutzmittel zu erleichtern. Denkbar ist insbesondere, dass entsprechend den Präferenzen im Hinblick auf einen bestimmten Hersteller eines Pflanzenschutzmittels Rechnung getragen werden kann. Hierdurch kann es für den Nutzer des Systems erleichtert werden, bereits eine Vorauswahl zu treffen, so dass direkt ihm zur Verfügung stehende Pflanzenschutzmittel vorgeschlagen werden und er nicht sich durch eine Vielzahl von möglichen Optionen hindurch scrollen und dort noch einmal gesondert selektieren muss.

Außerdem kann vorgesehen sein, dass weiter ein Filtermodul vorgesehen ist, mittels dessen voreinstellbar und/oder auswählbar ist, dass lediglich Herstellerdaten eines bestimmten Herstellers eines Pflanzenschutzmittels für die Verknüpfung der Pflanzenschutzmitteldaten mit den Bilddaten und/oder Pflanzendaten durch das Auswertemodul heranziehbar sind. Durch diese Vorauswahl kann die Handhabung des Systems vereinfacht werden. Darüber hinaus kann durch die Vorselektion der Herstellerdaten auch der Datenabfragevorgang vereinfacht und beschleunigt werden. Insbesondere ist es dadurch möglich, weniger Daten übertragen zu müssen und gleichzeitig auch in weniger Daten suchen zu müssen. Hierdurch wird die Abfragezeit und gleichzeitig auch das zu übertragende Datenvolumen reduziert.

Die Bilddaten können zusätzlich Ortsdaten, z.B. GPS-Daten aufweisen. Durch die Verknüpfung der bloßen Bilddaten mit Ortsdaten wird es möglich, das Vorkommen bestimmter Pflanzenarten mit Ortsdaten zu verknüpfen und hierdurch weitere Erkenntnisse über beispielsweise eine landwirtschaftlich genutzte Anbaufläche oder eine forstwirtschaftlich genutzte Fläche zu gewinnen. Denkbar ist auch, beispielsweise im Zusammenhang mit der Unkrautvernichtung entsprechende Unkrautvernichtungsmittel am richtigen Ort ausbringen zu können und hierdurch die Ausbringung zu erleichtern.

Erfindungsgemäß weisen die Bilddaten zusätzlich Datumsangaben auf. Anhand der Datumsangaben wird auf den Wachstumszustand der in den Bilddaten enthaltenen Pflanzendaten geschlossen. Je nach Jahresverlauf und Datum weist eine Pflanze unterschiedliche Wachstumszustände auf, die hierdurch leichter zuzuordnen sind.

Hierdurch kann auch die Zeit, die für eine Datenbankabfrage und Auswertung notwendig ist, reduziert werden. Erfindungsgemäß sind die in der Pflanzendatenbankeinheit hinterlegten Daten nach Jahreszeit sortiert, sodass eine Selektion nach Jahreszeit erfolgt.

Die Bilddaten können zusätzlich Uhrzeitangaben aufweisen. Durch eine derartige Angabe wird es möglich, Licht und Schatteneffekte bei der Auswertung berücksichtigen zu können. Hierdurch kann die Qualität der Auswertung verbessert werden.

Des Weiteren kann vorgesehen sein, dass das mobile Endgerät ein Mobiltelefon, insbesondere ein Smartphone ist. Bei dem Smartphone kann es sich insbesondere um ein Smartphone mit einer Kamera und entsprechenden Verbindungen bzw. Anbindungen zum Internet handeln.

Des Weiteren kann vorgesehen sein, dass das mobile Endgerät ein Tablet-PC ist. Denkbar ist auch hier, dass es sich bei dem Tablet-PC um einen Tablet-PC handelt, der über eine Kamerafunktion und eine entsprechende Anbindung an das Internet verfügt.

Des Weiteren ist erfindungsgemäß eine Pflanzenkrankheitsdatenbankeinheit vorgesehen, in der Pflanzenkrankheitsdaten eingespeichert sind, wobei weiter in der Pflanzenkrankheitsdatenbankeinheit Verknüpfungsdaten eingespeichert sind, mittels derer die Pflanzenkrankheitsdaten mit den Bilddaten und/oder Pflanzendaten durch das Datenauswertemodul verknüpft sind. Denkbar ist beispielsweise, anhand von erkannten Pflanzenkrankheiten, die automatisch durch das System erkannt werden können, beispielsweise anhand Farbe, Struktur und ggf. veränderter Farbe bzw. veränderter Struktur der Pflanze ein geeignetes Pflanzenschutzmittel auszusuchen. Denkbar ist aber auch, lediglich die Pflanzenkrankheiten automatisch erkennen zu können, um hieraus Rückschlüsse auf weitere landwirtschaftliche oder forstwirtschaftliche Maßnahmen ziehen zu können.

Darüber hinaus ist denkbar, dass weiter eine Pflanzenschädlingsdatenbankeinheit vorgesehen ist, in der Pflanzenschädlingsdaten eingespeichert sind, wobei weiter in der Pflanzenschädlingsdatenbankeinheit Verknüpfungsdaten eingespeichert sind, mittels derer die Pflanzenschädlingsdaten mit den Bilddaten und/oder Pflanzendaten durch das Datenauswertemodul verknüpft sind. Dadurch ergibt sich der Vorteil, bei der Aufnahme von Pflanzen und den entsprechenden Bilddaten darauf erkennbare Pflanzenschädlinge, wie beispielsweise Blattläuse, Käfer, Flöhe, Insekten oder auch entsprechende Abfraßmuster zu erkennen und mit in dem System vorgehaltenen entsprechenden Informationen abgleichen zu können. Dem Nutzer des Systems können hierdurch entsprechende Information bereitgestellt werden, welche Pflanzenschädlingen vorhanden sind. Weiter ist möglich, dass der Nutzer durch das System automatisch Informationen erhält, welche Pflanzenschutzmittel im Zusammenhang mit den erkannten Pflanzenschädlingen ausgewählt werden können.

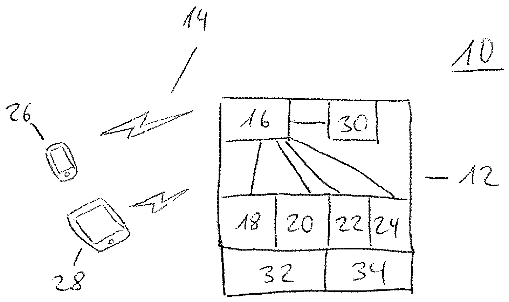

Weitere Einzelheiten und Vorteile der Erfindung sollen nun anhand eines in der Zeichnung dargestellten Ausführungsbeispiels näher erläutert werden.

Die einzige Figur zeigt schematisch den generellen Aufbau der vorliegenden Erfindung, nämlich eine mögliche Ausführungsform eines Systems zur automatischen Erkennung von Pflanzen.

Die einzige Figur zeigt ein System 10 zur automatischen Erkennung von Pflanzen. Das System 10 weist eine zentrale Servereinheit 12 auf.

Des Weiteren ist ein Netzwerk 14 vorgesehen, hier das Internet, mittels dessen die zentrale Servereinheit 12 in Datenaustausch mit weiteren Geräten steht.

Die Servereinheit 12 weist eine automatische Bildverarbeitungseinheit 16, eine Pflanzendatenbankeinheit 18, eine Bilddatenbankeinheit 20, eine Pflanzenschutzmitteldatenbank 22 und ein Filtermodul 24 auf. Die Servereinheit 12 weist ferner ein Datenauswertemodul 30 auf.

**In** der Pflanzendatenbankeinheit 18 sind Pflanzendaten eingespeichert.

**In** der Bilddatenbankeinheit 20 sind ferner Bilddaten betreffend Pflanzen eingespeichert, typischerweise betreffend die Pflanzen, die auch in der Pflanzendatenbankeinheit 18 vorgehalten sind.

Die Bilddaten betreffend die Pflanzen betreffen Pflanzenbilddaten über den gesamten Jahreskreis betreffend Pflanzen in sämtlichen Wachstumsstufen und Ausgestaltungen.

Die Pflanzenschutzmitteldatenbankeinheit 22 ist derart ausgebildet, dass in ihr Pflanzenschutzmitteldaten eingespeichert sind und darüber hinaus auch Verknüpfungsdaten, mittels derer die Pflanzenschutzmitteldaten mit Bilddaten und Pflanzendaten durch das Datenauswertemodul verknüpft sind.

Darüber hinaus sind auch Herstellerdaten betreffend den Hersteller eines Pflanzenschutzmittels in den Pflanzenschutzmitteldaten enthalten.

Das Filtermodul 24 ist derart ausgebildet, dass mittels des Filtermoduls 24 voreingestellt oder ausgewählt werden kann, dass lediglich Herstellerdaten eines bestimmten Herstellers eines Pflanzenschutzmittels für die Verknüpfung der Pflanzenschutzmitteldaten mit den Bilddaten und den Pflanzendaten durch das Datenauswertemodul 30 heranziehbar sind.

Durch das Datenauswertemodul 30 können anhand der in die Pflanzenschutzmitteldatenbank 22 eingespeicherten Verknüpfungsdaten Bilddaten mit Pflanzendaten verknüpft werden.

Des Weiteren ist eine Pflanzenkrankheitsdatenbankeinheit 32 vorgesehen, in der Pflanzenkrankheitsdaten eingespeichert sind. Des Weiteren sind in der Pflanzenkrankheitsdatenbankeinheit 32 Verknüpfungsdaten eingespeichert, mittels derer die Pflanzenkrankheitsdaten mit Bilddaten und Pflanzendaten durch das Datenauswertemodul 30 verknüpft sind.

Weiter ist eine Pflanzenschädlingsdatenbankeinheit 34 vorgesehen, in der Pflanzenschädlingsdaten eingespeichert sind. Des Weiteren sind in dieser Pflanzenschädlingsdatenbankeinheit 34 Verknüpfungsdaten eingespeichert, mittels derer die Pflanzenschädlingsdaten mit den Bilddaten und Pflanzendaten durch das Datenauswertemodul 30 verknüpft sind.

Die Bilddaten können zusätzlich Ortsdaten, hier GPS-Daten, Datumsangaben und auch Uhrzeitangaben aufweisen, also einen sogenannten Zeitstempel.

Zum System 10 gehören weiter mobile Endgeräte, wie beispielsweise ein Smartphone 26 oder ein Tablet-PC 28. Bei dem Smartphone kann es sich beispielsweise um ein IPhone oder bei dem Tablet-PC beispielsweise um ein I-Pad handeln.

Die Funktion des Systems lässt sich beispielsweise wie folgt beschreiben:
Mittels des Smartphones 26 oder des Tablet-PC 28 kann der Nutzer auf einer landwirtschaftlich genutzten Fläche oder einer forstwirtschaftlich genutzten Fläche ein Foto der zu untersuchenden Pflanze aufnehmen.

Dies kann beispielsweise aus einer App heraus oder auch direkt über die Kamerafunktion erfolgen. Dieses Foto ist neben den Ortsdaten auch mit einem Zeitstempel versehen und diese Informationen werden insgesamt über das Netzwerk 14, also das mobile Kommunikationsnetzwerk und das Internet an die zentrale Servereinheit 12 übertragen.

Die zentrale Servereinheit 12 weist hierzu entsprechende Dateneingangs- und ausgangsmittel auf, mittels derer Daten empfangen aber auch rückübertragen werden können.

In der zentralen Servereinheit 12 wird mittels der automatischen Bildverarbeitungseinheit 16 eine Auswertung der übertragenen Bilder durchgeführt, um die auf den Bilddaten enthaltenen Informationen zu einer Pflanze anhand der in der Bilddatenbankeinheit 20 enthaltenen Bilddaten abzugleichen und in Zusammenhang mit der Pflanzendatenbankeinheit 18 die entsprechende Pflanze automatisch herauszufinden. Durch das Datenauswertemodul 30 kann dann nach Erkennung der Pflanze automatisch anhand der in der Pflanzenschutzmitteldatenbankeinheit 22 enthaltenen Pflanzenschutzmitteldaten ein Vorschlag herausgesucht werden, mit welchem Unkrautvernichtungsmittel oder Pflanzenschutzmittel weiter vorgegangen werden kann.

Anhand der übertragenen Bilddaten kann durch das Datenauswertemodul 30 auch anhand der in der Pflanzenkrankheitsdatenbankeinheit 32 erkannt werden, ob und welche Pflanzenkrankheiten vorliegen. Hier wird insbesondere aufgrund von Farbe und/oder Struktur bzw. der entsprechenden Veränderungen erkannt, ob bzw. welche Pflanzenkrankheit vorliegt. Dieser Vorgang erfolgt ebenfalls automatisch.

Anhand der aufgenommenen Bilddaten, die abgeglichen werden, kann auch gleichzeitig erkannt werden, inwieweit Pflanzenschädlinge vorhanden sind. Hierzu wird auf die in der Pflanzenschädlingsdatenbankeinheit 34 hinterlegten Daten zurückgegriffen, die dann entsprechend mit den weiteren vorhandenen Daten verknüpft werden. Beispielsweise kann auf die in der Pflanzenschutzmitteldatenbankeinheit 22 enthaltenen Pflanzenschutzmitteldaten entsprechend zurückgegriffen werden, um auch hier einen entsprechenden Vorschlag herauszusuchen, mit welchem Pflanzenschutzmittel, d.h. Schädlingsbekämpfungsmittel vorgegangen werden kann. Die Auswertung erfolgt darüber, ob auf den übertragenen Bildern beispielsweise Blattläuse, Käfer, Flöhe, Insekten oder entsprechende Abfraßmuster erkennbar sind.

Die automatische Bilderkennung, die mittels der automatischen Bildverarbeitungseinheit 16 durchgeführt wird, kann sich anhand von Referenzpunkten bzw. Referenzstrukturen der in den übertragenen Bildern enthaltenen Bildinformationen betreffend die aufgenommenen Pflanzen orientieren.

Denkbar ist beispielsweise auch, dass einmal erkannte Daten auch genutzt werden, dass beispielsweise anhand der an die zentrale Servereinheit übertragenen Bilder diese Bildinformationen auch in die Pflanzendatenbankeinheit mit eingespeichert werden können. Es ist denkbar, dass dies erst erfolgen kann, wenn eine entsprechende Bestätigung durch einen qualifizierten Benutzer erfolgt ist. Ein derartiger Benutzer kann ein sog. Power-User oder ein Mitarbeiter des Betreibers sein, bei dem entsprechende Kenntnisse im Hinblick auf die Pflanzen vorhanden sind.

Im Zusammenhang mit den Pflanzenkrankheiten oder dem Auftreten von Pflanzenschädlingen kann es möglich sein, die entsprechenden Ortsdaten mit den Informationen betreffend die Pflanzenkrankheiten bzw. das Auftreten von Pflanzenschädlingen zu verknüpfen.

Aus den Informationen betreffend Ort und das Vorkommen von Pflanzenkrankheiten, Schädlingen, aber auch das Auftreten von Unkraut kann entsprechend erkannt werden, wo diese auftreten und diese Information weitergegeben werden. Hierüber lässt sich auch der Einsatz von Pflanzenschutzmitteln deutlich reduzieren, da beispielsweise nur die entsprechend identifizierten, betroffenen bzw. befallenen Regionen mit einem entsprechenden Pflanzenschutzmittel oder Schädlingsbekämpfungsmittel behandelt werden müssen.

**In** diesem Zusammenhang ist insbesondere denkbar, das System zur automatischen Erkennung von Pflanzen auf einer Pflanzenschutzmittelspritze, die auf einem landwirtschaftlichen Nutzfahrzeug montiert ist, anzubringen, so dass beim Befahren der bewirtschafteten Fläche automatisch erkannt wird, wo der Bedarf an Ausbringen von Pflanzenschutzmitteln vorhanden ist und das Pflanzenschutzmittel bzw. Schädlingsbekämpfungsmittel dann dort gezielt ausgebracht wird.

Es ist auch denkbar, dass das System zwischen der zentralen Servereinheit und mehreren mobilen Endgeräten oder auch einem entsprechenden Experten-Callcenter oder einer Experten-Zentrale eine Chatfunktion bereitstellt, so dass die Nutzer mit den mobilen Endgeräten 26, 28 sich mit Experten oder auch untereinander zu entsprechenden, mittels der mobilen Endgeräte aufgenommenen Bilder betreffend Pflanzen, Schädlinge oder Pflanzenkrankheiten austauschen können.

Diese Informationen können automatisch an das mobile Endgerät 26 oder 28 durch die Servereinheit 12 rückübertragen werden.

Darüber hinaus kann vorgesehen sein, dass mittels des Filtermoduls 24, entweder einstellbar durch den Nutzer oder voreingestellt durch den Hersteller, im Zusammenhang mit der erkannten Pflanze nur die Pflanzenschutzmitteldaten eines bestimmten Herstellers übertragen werden.

Grundsätzlich ist aber auch denkbar, dass beispielsweise bei Deaktivierung des Filtermoduls 24 oder entsprechender Einstellung des Filtermoduls 24 sämtliche möglichen Pflanzenschutzmittel oder Pestizide oder Unkrautvernichtungsmittel entsprechend herausgesucht und von der Servereinheit 12 über das Netzwerk 14 an die mobilen Endgeräte 26 oder 28 rückübertragen werden.

### Bezugszeichen

- 10: System
- 12: Servereinheit
- 14: Netzwerk
- 16: Bildverarbeitungseinheit
- 18: Pflanzendatenbankeinheit
- 20: Bilddatenbankeinheit
- 22: Pflanzenschutzmitteldatenbank
- 24: Filtermodul
- 26: Smartphone
- 28: Tablet-PC
- 30: Datenauswertemodul
- 32: Pflanzenkrankheitsdatenbankeinheit
- 34: Pflanzenschädlingsdatenbankeinheit

## Patentansprüche

1. System (10) zur automatischen Erkennung von Pflanzen, mit wenigstens einer zentralen Servereinheit (12), wenigstens einem Netzwerk (14), wenigstens einer automatischen Bildverarbeitungseinheit (16), wenigstens einer Pflanzendatenbankeinheit (18), in der Pflanzendaten eingespeichert sind, wenigstens einer Bilddatenbankeinheit (20), in der Bilddaten betreffend Pflanzen eingespeichert sind, und mit wenigstens einem mobilen Endgerät (26, 28) mit wenigstens einer Kamera, wobei die zentrale Servereinheit (12) über das Netzwerk (14) mit dem mobilen Endgerät (26, 28) im Betriebszustand in Datenverbindung ist, wobei mittels der Kamera des Endgeräts (26, 28) Bilddaten einer Pflanze erzeugbar und über das Netzwerk (14) an die Servereinheit (12) übertragbar sind, wobei die automatische Bildverarbeitungseinheit (16) gemeinsam mit der Pflanzendatenbankeinheit (18) und der Bilddatenbankeinheit (20) anhand der übermittelten Bilddaten durch Abgleich mit in der Pflanzendatenbankeinheit (18) und der Bilddatenbankeinheit (20) die übermittelten Bilddaten der Pflanze dahingehend auswertet, dass die Pflanze bestimmbar ist und diese Bestimmung an das mobile Endgerät (26, 28) über das Netzwerk (14) durch die Servereinheit (12) rückübertragbar ist, wobei die Servereinheit (12) ferner ein Datenauswertemodul (30) aufweist, **dadurch gekennzeichnet, dass** weiter eine Pflanzenkrankheitsdatenbankeinheit (32) vorgesehen ist, in der Pflanzenkrankheitsdaten eingespeichert sind, wobei weiter in der Pflanzenkrankheitsdatenbankeinheit (32) Verknüpfungsdaten eingespeichert sind, mittels derer die Pflanzenkrankheitsdaten mit den Bilddaten und/oder Pflanzendaten durch das Datenauswertemodul (30) verknüpft sind,
wobei die Bilddaten zusätzlich Datumsangaben aufweisen,
wobei das System dazu eingerichtet ist, anhand der Datumsangaben der Bilddaten unterschiedliche Wachstumszustände zuzuordnen,
wobei die Pflanzendaten in der Pflanzendatenbankeinheit nach Jahreszeit sortiert sind, und
wobei das System dazu eingerichtet ist, eine Selektion der Pflanzendaten nach der Jahreszeit vorzunehmen.

2. System (10) nach Anspruch 1, **dadurch gekennzeichnet, dass** weiter eine Pflanzenschutzmitteldatenbankeinheit (18) vorgesehen ist, in der Pflanzenschutzmitteldaten eingespeichert sind, wobei weiter in der Pflanzenschutzmitteldatenbankeinheit (18) Verknüpfungsdaten eingespeichert sind, mittels derer die Pflanzenschutzmitteldaten mit den Bilddaten und/oder Pflanzendaten durch das Datenauswertemodul (30) verknüpft sind.

3. System (10) nach Anspruch 2, **dadurch gekennzeichnet, dass** die Pflanzenschutzmitteldaten Wirkstoffgruppendaten und/oder Herstellerdaten betreffend den Hersteller eines Pflanzenschutzmittels umfassen.

4. System (10) nach Anspruch 3, **dadurch gekennzeichnet, dass** weiter ein Filtermodul (24) vorgesehen ist, mittels dessen voreinstellbar und/oder auswählbar ist, dass lediglich Herstellerdaten eines bestimmten Herstellers eines Pflanzenschutzmittels für die Verknüpfung der Pflanzenschutzmitteldaten mit den Bilddaten und/oder Pflanzendaten durch das Datenauswertemodul (30) heranziehbar sind.

5. System (10) nach einem der vorhergehenden Ansprüche, **dadurch gekennzeichnet, dass** die Bilddaten zusätzlich Ortsdaten, z.B. GPS-Daten aufweisen.

6. System (10) nach einem der vorhergehenden Ansprüche, **dadurch gekennzeichnet, dass** die Bilddaten zusätzlich Uhrzeitangaben aufweisen.

7. System (10) nach einem der vorhergehenden Ansprüche, **dadurch gekennzeichnet, dass** das mobile Endgerät (26, 28) ein Mobiltelefon, insbesondere ein Smartphone (26) ist.

8. System (10) nach einem der vorhergehenden Ansprüche, **dadurch gekennzeichnet, dass** das mobile Endgerät (26, 28) ein Tablet-PC (28) ist.

9. System (10) nach einem der vorhergehenden Ansprüche, **dadurch gekennzeichnet, dass** weiter eine Pflanzenschädlingsdatenbankeinheit (34) vorgesehen ist, in der Pflanzenschädlingsdaten eingespeichert sind, wobei weiter in der Pflanzenschädlingsdatenbankeinheit (34) Verknüpfungsdaten eingespeichert sind, mittels derer die Pflanzenschädlingsdaten mit den Bilddaten und/oder Pflanzendaten durch das Datenauswertemodul (30) verknüpfbar sind.

10. Verwendung eines Systems (10) mit wenigstens einer zentralen Servereinheit (12), wenigstens einem Netzwerk (14), wenigstens einer automatischen Bildverarbeitungseinheit (16), wenigstens einer Pflanzendatenbankeinheit (18), in der Pflanzendaten eingespeichert sind, wenigstens einer Bilddatenbankeinheit (20), in der Bilddaten betreffend Pflanzen eingespeichert sind, und mit wenigstens einem mobilen Endgerät (26, 28) mit wenigstens einer Kamera, wobei die zentrale Servereinheit (12) über das Netzwerk (14) mit dem mobilen Endgerät (26, 28) im Betriebszustand in Datenverbindung ist, wobei mittels der Kamera des Endgeräts (26, 28) Bilddaten einer Pflanze erzeugbar und über das Netzwerk (14) an die Servereinheit (12) übertragbar sind, wobei die automatische Bildverarbeitungseinheit (16) gemeinsam mit der Pflanzendatenbankeinheit (18) und der Bilddatenbankeinheit (20) anhand der übermittelten Bilddaten durch Abgleich mit in der Pflanzendatenbankeinheit (18) und der Bilddatenbankeinheit (20) die übermittelten Bilddaten der Pflanze dahingehend auswertet, dass die Pflanze bestimmbar ist und diese Bestimmung an das mobile Endgerät (26, 28) über das Netzwerk (14) durch die Servereinheit (12) rückübertragbar ist, und dass eine Pflanzenkrankheitsdatenbankeinheit (32) vorgesehen ist, in der Pflanzenkrankheitsdaten eingespeichert sind, wobei weiter in der Pflanzenkrankheitsdatenbankeinheit (32) Verknüpfungsdaten eingespeichert sind, mittels derer die Pflanzenkrankheitsdaten mit den Bilddaten und/oder Pflanzendaten verknüpft sind,
zur automatischen Erkennung von Pflanzen und/oder Krankheiten,
wobei die Bilddaten zusätzlich Datumsangaben aufweisen, sodass unterschiedliche Wachstumszustände zugeordnet sind, und
wobei die Pflanzendaten in der Pflanzendatenbankeinheit nach Jahreszeit sortiert sind, sodass eine Selektion nach Jahreszeit bereitgestellt wird.

## Claims

1. A system (10) for automatic plant recognition, comprising at least one central server unit (12), at least one network (14), at least one automatic image processing unit (16), at least one plant database unit (18) in which plant data is stored, at least one image database unit (20) in which image data relating to plants is stored, and at least one mobile terminal (26, 28) having at least one camera, wherein the central server unit (12) is in data communication with the mobile terminal (26, 28) in the operating state via the network (14), wherein image data of a plant can be generated by means of the camera of the terminal (26, 28) and transmitted to the server unit (12) via the network (14), wherein the automatic image processing unit (16), together with the plant database unit (18) and the image database unit (20), evaluates the transmitted image data of the plant by comparison with the plant database unit (18) and the image database unit (20) to the effect that the plant can be identified and this identification can be transmitted back to the mobile terminal (26, 28) via the network (14) by the server unit (12), the server unit (12) also having a data evaluation module (30), **characterized in that** a plant disease database unit (32) is also provided, in which plant disease data is stored, wherein furthermore in the plant disease database unit (32) link data is stored, by means of which the plant disease data is linked to the image data and/or plant data by the data evaluation module (30),
the image data additionally comprising date information,
the system being set up to allocate different growth states on the basis of the date information of the image data,
the plant data in the plant database unit being sorted by season, and
the system being set up to select the plant data depending on the season.

2. The system (10) according to claim 1, **characterized in that** a plant protection agent database unit (18) is also provided, in which plant protection agent data are stored, wherein link data is also stored in the plant protection agent database unit (18), by means of which the plant protection agent data is linked to the image data and/or plant data by the data evaluation module (30).

3. The system (10) according to claim 2, **characterized in that** the plant protection agent data comprises active substance group data and/or manufacturer data relating to the manufacturer of a plant protection agent.

4. The system (10) according to claim 3, **characterized in that** a filter module (24) is also provided, by means of which it is possible to preset and/or select that only manufacturer data of a specific manufacturer of a plant protection agent can be used for linking the plant protection agent data to the image data and/or plant data by the data evaluation module (30).

5. The system (10) according to any one of the preceding claims, **characterized in that** the image data additionally comprises location data, for example GPS data.

6. The system (10) according to any one of the preceding claims, **characterized in that** the image data additionally comprises time information.

7. The system (10) according to any one of the preceding claims, **characterized in that** the mobile terminal (26, 28) is a mobile phone, in particular a smartphone (26).

8. The system (10) according to any one of the preceding claims, **characterized in that** the mobile terminal (26, 28) is a tablet PC (28).

9. The system (10) according to any one of the preceding claims, **characterized in that** a plant pest database unit (34) is also provided, in which plant pest data is stored, wherein link data is also stored in the plant pest database unit (34), by means of which link data the plant pest data can be linked to the image data and/or plant data by the data evaluation module (30).

10. Use of a system (10) comprising at least one central server unit (12), at least one network (14), at least one automatic image processing unit (16), at least one plant database unit (18) in which plant data is stored, at least one image database unit (20) in which image data relating to plants is stored, and at least one mobile terminal (26, 28) having at least one camera, wherein the central server unit (12) is in data communication with the mobile terminal (26, 28) in the operating state via the network (14), wherein image data of a plant can be generated by means of the camera of the terminal (26, 28) and transmitted to the server unit (12) via the network (14), wherein the automatic image processing unit (16), together with the plant database unit (18) and the image database unit (20), evaluates the transmitted image data of the plant by comparison with the plant database unit (18) and the image database unit (20) to the effect that the plant can be identified and this identification can be transmitted back to the mobile terminal (26, 28) via the network (14) by the server unit (12), and in that a plant disease database unit (32) is also provided, in which plant disease data is stored, wherein furthermore in the plant disease database unit (32) link data is stored, by means of which the plant disease data is linked to the image data and/or plant data,
for the automatic recognition of plants and/or diseases,
the image data additionally comprising date information so that different growth states are assigned, and
the plant data in the plant database unit being sorted by season so that a selection depending on the season is provided.

## Revendications

1. Système (10) de reconnaissance automatique de plantes, avec au moins une unité de serveur centrale (12), au moins un réseau (14), au moins une unité de traitement d'image automatique (16), au moins une unité de base de données de plantes (18), dans laquelle des données sur les plantes sont mémorisées, avec au moins une unité de banque de données d'images (20) dans laquelle des données d'image concernant les plantes sont mémorisées et avec au moins un appareil terminal mobile (26, 28) avec au moins une caméra, dans lequel l'unité de serveur centrale (12) est en liaison de données via le réseau (14) avec l'appareil terminal mobile (26, 28) dans l'état de fonctionnement, dans lequel des données d'image peuvent être produites à ce sujet sur une plante à l'aide de la caméra de l'appareil terminal (26, 28) et être transmises à l'unité de serveur (12) via le réseau (14), dans lequel l'unité de traitement d'image automatique (16) analyse conjointement avec l'unité de base de données de plantes (18) et l'unité de banque de données d'images (20) à l'aide des données d'image transmises par rapprochement avec les données d'image sur la plante déterminées dans l'unité de base de données de plantes (18) et dans l'unité de banque de données d'images (20) que la plante peut être identifiée et que cette identification peut être renvoyée à l'appareil terminal mobile (26, 28) via le réseau (14) au travers de l'unité de serveur (12), dans lequel l'unité de serveur (12) comporte en outre un module d'analyse de données (30), **caractérisé en ce qu'**une unité de base de données de maladies de plantes (32) est en outre prévue dans laquelle des données de maladies de plantes sont mémorisées, dans lequel des données de combinaison sont en outre mémorisées dans l'unité de base de données de maladies de plantes (32) à l'aide desquelles les données de maladies de plantes sont associées aux données d'image et/ou aux données sur les plantes au travers du module d'analyse de données (30) ; dans lequel les données d image comportent en outre des indications de date ;
dans lequel le système est conçu pour associer, à l'aide des indications de date, des données d'image de différents états de croissance ;
dans lequel les données sur les plantes sont triées en fonction de la saison dans l'unité de base de données de plantes ; et
dans lequel le système est conçu pour réaliser une sélection des données sur les plantes en fonction de la saison.

2. Système (10) selon la revendication 1, **caractérisé en ce qu'**une unité de base de données de moyens phytosanitaires (18) est en outre prévue dans laquelle des données de moyens phytosanitaires sont mémorisées, dans lequel des données de combinaison sont en outre mémorisées dans l'unité de base de données de moyens phytosanitaires (18) à l'aide desquelles les données de moyens phytosanitaires sont associées aux données d'image et/ou aux données sur les plantes au travers du module d'analyse de données (30).

3. Système (10) selon la revendication 2, **caractérisé en ce que** les données de moyens phytosanitaires comprennent des données de substance active et/ou des données de fabrication concernant le fabricant d'un moyen phytosanitaire.

4. Système (10) selon la revendication 3, **caractérisé en ce qu'**un module de filtrage (24) est en outre prévu à l'aide duquel un préréglage et/ou une présélection permettant de seules les données de fabrication d'un fabricant défini de moyen phytosanitaire puissent être utilisées pour l'association des données de moyens phytosanitaires avec les données d'image et/ou avec les données sur les plantes au travers du module d'analyse de données (30).

5. Système (10) selon l'une quelconque des revendications précédentes, **caractérisé en ce que** les données d'image comportent en outre des données géolocalisées, par exemple des données GPS.

6. Système (10) selon l'une quelconque des revendications précédentes, **caractérisé en ce que** les données d'image comportent en outre des indications d'heure.

7. Système (10) selon l'une quelconque des revendications précédentes, **caractérisé en ce que** l'appareil terminal mobile (26, 28) est un téléphone mobile, notamment un smartphone (26).

8. Système (10) selon l'une quelconque des revendications précédentes, **caractérisé en ce que** l'appareil terminal mobile (26, 28) est une tablette PC (28).

9. Système (10) selon l'une quelconque des revendications précédentes, **caractérisé en ce qu'**une unité de base de données sur les ravageurs des plantes (34) est en outre prévue dans laquelle des données sur les ravageurs des plantes sont mémorisées, dans lequel des données de combinaison sont en outre mémorisées dans l'unité de base de données sur les ravageurs des plantes (34) à l'aide desquelles les données sur les ravageurs des plantes peuvent être associées aux données d'image et/ou aux données sur les plantes au travers du module d'analyse de données (30).

10. Utilisation d'un système (10) avec au moins une unité de serveur centrale (12), au moins un réseau (14), au moins une unité de traitement d'image automatique (16), au moins une unité de base de données de plantes (18) dans laquelle des données sur les plantes sont mémorisées, avec au moins une unité de banque de données d'images (20) dans laquelle des données d'image concernant des plantes sont mémorisées et avec au moins un appareil terminal mobile (26, 28) avec au moins une caméra, dans lequel l'unité de serveur centrale (12) est en liaison de données avec l'appareil terminal mobile (26, 28) dans l'état de fonctionnement via le réseau (14), dans lequel des données d'image d'une plante peuvent être produites à l'aide de la caméra de l'appareil terminal (26, 28) et peuvent être transmises à l'unité de serveur (12) via le réseau (14), dans lequel l'unité de traitement d'image automatique (16) analyse, conjointement avec l'unité de base de données de plantes (18) et l'unité de banque de données d'images (20) à l'aide des données d'image transmises par rapprochement avec les données d'image transmises sur la plante dans l'unité de base de données de plantes (18) et dans l'unité de banque de données d'images (20) que la plante peut être identifiée et que cette identification peut être renvoyée à l'appareil terminal mobile (26, 28) au travers de l'unité de serveur (12) via le réseau (14) et qu'une unité de base de données de maladies de plantes (32) est prévue dans laquelle les données de maladies de plantes sont mémorisées, dans lequel des données de combinaison sont en outre mémorisées dans l'unité de base de données de maladies de plantes (32) à l'aide desquelles les données de maladies de plantes sont associées aux données d'image et/ou aux données sur les plantes pour la reconnaissance automatique de plantes et/ou de maladies ;
dans lequel les données d'image comportent en outre des indications de date, de sorte que différents états de croissance sont associés ; et
dans lequel les données sur les plantes sont triées en fonction de la saison dans l'unité de base de données de plantes, de façon à mettre à disposition une sélection en fonction de la saison.
